# FASCICULE DE BREVET EUROPEEN

(11) **EP 3 924 612 B1**
(45) Date de publication et mention de la délivrance du brevet: **25.01.2023**
(21) Numéro de dépôt: 20707736.3
(22) Date de dépôt: 10.02.2020
(51) Int. Cl.: F02K 1/76

(54) **SYSTÈME DE COMMANDE D'UN INVERSEUR DE POUSSÉE POUR UNE NACELLE**
SYSTEM ZUR STEUERUNG EINES SCHUBUMKEHRERS FÜR EINE TRIEBWERKSGONDEL
SYSTEM FOR CONTROLLING A THRUST REVERSER FOR A NACELLE

(30) Priorité: 14.02.2019 FR 1901503
(43) Date de publication de la demande: 22.12.2021
(73) Titulaire: Safran Nacelles, 76700 Gonfreville-l'Orcher (FR)
(72) Inventeur: CARUEL, Pierre, 77550 MOISSY CRAMAYEL (FR); GIARD, Régis, 77550 MOISSY CRAMAYEL (FR); DESCAMPS, Alexandre, 77550 MOISSY CRAMAYEL (FR); VANCON, Philippe, 77550 MOISSY CRAMAYEL (FR)
(74) Mandataire: Germain Maureau
(86) Numéro de dépôt international: PCT/FR2020/050233
(87) Numéro de publication internationale: WO 2020/165533

(56) Documents cités:
- FR-A1- 2 435 604
- US-A- 3 086 360
- US-A1- 2017 226 963

## Description

La présente invention se rapporte à un système de commande d'un inverseur de poussée pour une nacelle.

Un avion est propulsé par un ou plusieurs ensembles propulsifs comprenant un turboréacteur logeant dans une nacelle tubulaire. Chaque ensemble propulsif est rattaché à l'avion par un mât situé généralement sous une aile ou au niveau du fuselage. Une nacelle présente généralement une structure comprenant une entrée d'air en amont du moteur, une section médiane destinée à entourer une soufflante du turboréacteur et une section aval abritant des moyens d'inversion de poussée. L'inverseur de poussée est un dispositif qui permet de diriger le flux d'air généré par le turboréacteur vers l'avant, permettant à la fois de raccourcir la distance d'atterrissage et également de limiter la sollicitation des freins au niveau des atterrisseurs.

Les technologies les plus modernes utilisent des turboréacteurs double flux : dans ces turboréacteurs, on vient générer par l'intermédiaire d'une turbomachine un flux d'air chaud dit flux primaire, et par l'intermédiaire des aubes de la soufflante un flux d'air froid dit flux secondaire. Ce second flux dit d'air froid circule à l'extérieur du turboréacteur à travers un passage annulaire également appelé veine, cette veine étant formée entre un carénage du turboréacteur et la paroi interne de la nacelle. Les flux primaires et secondaires sont ensuite mélangés à l'aval de la veine secondaire.

Dans ce type de moteur, l'inverseur de poussée vient obstruer totalement ou partiellement la veine de flux d'air mélangé par l'intermédiaire de volets, afin de rediriger ce flux vers l'avant de la nacelle.

Il existe plusieurs technologies différentes connues de l'homme du métier pour réaliser ces inverseurs de poussée notamment à portes coulissantes ou pivotantes dont l'actionnement est électrique ou hydraulique.

Dans tous les cas, les moyens d'inversion de poussée comprennent au moins une porte, ou capot, mobile entre une position de jet direct, dans laquelle la porte assure la continuité aérodynamique de la nacelle et une position de jet indirect dans laquelle la porte ouvre un passage dans la nacelle en ouvrant des grilles disposées autour de cette veine qui reçoivent le flux d'air mélangé dévié par des volets pour le renvoyer vers l'extérieur et vers l'avant.

Par ailleurs, il est également connu de verrouiller ces portes au moyens de verrous tels que des crochets venant en prise, en position de fermeture, avec un élément du capot mobile.

Afin de pouvoir réaliser un verrouillage sans charge s'exerçant sur le moyen de verrouillage, il est habituel de prévoir un sur-escamotage de la partie mobile, en particulier en ce qui concerne les inverseurs de poussée à portes pivotantes.

Dans le cas d'un mécanisme hydraulique de verrouillage et de déverrouillage des portes de l'inverseur de poussée, ce sur-escamotage est mis en oeuvre à l'ouverture des portes par exemple, par une étape de pressurisation des actionneurs de type vérin qui par défaut maintient les actionneurs en position fermée, avant la commande des verrous qui conditionnent ensuite l'ouverture de la porte puis celle du ou des actionneurs, le fonctionnement étant séquentiel. C'est cette première étape de pressurisation des actionneurs qui vient déplacer la porte sur cette sur-course, réduisant, voire supprimant, ainsi la charge subie par les verrous avant d'être commandés en ouverture. Toutefois, même avec l'utilisation de verrous déverrouillables sous charge, l'architecture des systèmes de commande connus de l'homme de l'art conduit à réaliser un cycle de fermeture non nécessaire, et conduit par conséquent à dimensionner la structure et le système de commande en fatigue.

Le document FR2435604 A1 divulgue un système de commande d'un inverseur de poussée pour une nacelle d'un ensemble propulsif. Le document US2017/226963 A1 montre un autre système d'inversion de poussée connu de l'art antérieur.

Le but de l'invention est de résoudre tout ou partie de ces inconvénients, notamment en proposant une architecture hydraulique de commande d'inverseur de poussée sans sur-escamotage associé à au moins un verrou déverrouillable sous charge, et dont la fatigue est réduite.

A cet effet, la présente invention concerne un système de commande d'un inverseur de poussée pour une nacelle d'un ensemble propulsif comprenant un moteur et abritant des moyens d'inversion de poussée mobiles, les moyens d'inversion de poussée mobiles comprenant au moins une porte mobile entre une position de jet direct, dans laquelle la porte assure la continuité aérodynamique de la nacelle et une position de jet inversé dans laquelle elle ouvre au moins un passage dans la nacelle recevant un flux d'air dévié par les moyens d'inversion de poussée pour le renvoyer vers l'extérieur et vers l'avant, le système de commande comprenant :
- au moins un actionneur de manoeuvre agencé pour manoeuvrer la porte entre les positions de jet direct et de jet inversé,
- au moins un moyen de verrouillage/déverrouillage déverrouillable sous charge permettant le verrouillage et/ou le déverrouillage de la porte, le moyen de verrouillage/déverrouillage étant mobile entre une position de fermeture dans laquelle il maintient les portes en position de jet direct et une position d'ouverture dans laquelle les portes sont libérées,
le système de commande étant caractérisé en ce qu'il comprend :
- une vanne centrale de commande formant une unité de commande d'isolation,
- une première et une deuxième vanne de commande, chacune alimentée par la vanne centrale de commande,
- un distributeur à tiroir, alimenté au moins par les première et deuxième vannes de commande, le distributeur à tiroir étant configuré de sorte que la différence de pression entre les deux arrivées des première et deuxième vannes de commande assure le déplacement du tiroir du distributeur entre une première position stable et une deuxième position stable,
l'actionneur de manoeuvre et le moyen de verrouillage/déverrouillage étant configurés pour être commandés chacun par au moins un élément choisi parmi la première vanne de commande, la deuxième vanne de commande et le distributeur à tiroir.

Grâce à une telle combinaison de caractéristiques, l'au moins un actionneur de manoeuvre et l'au moins un moyen de verrouillage sont commandés par trois vannes que sont la vanne centrale, et les première et deuxième vannes de commande, par exemple des électrovannes.

Dans une telle configuration, l'actionnement à l'ouverture de l'actionneur de manoeuvre n'est pas directement pressurisé avant une étape de déverrouillage et leurs fonctionnements sont sensiblement parallèles sur le plan hydraulique.

Par ailleurs, grâce à la présence d'un tel tiroir, l'ouverture de la vanne centrale de commande n'implique pas directement la mise sous pression de l'actionneur de manoeuvre, pression qui était utilisée dans l'art antérieur pour effectuer une sur-course conditionnant ensuite la bonne ouverture du moyen de verrouillage.

Certains aspects préférés mais non limitatifs du système de commande sont les suivants :
L'actionneur de manoeuvre et le moyen de verrouillage sont commandés par des vérins double effet à deux chambres, chacun alimenté par au moins l'un des éléments choisi parmi la première vanne, la deuxième vanne et le distributeur à tiroir.

Le système de commande comprend un verrou primaire commandé par le moyen de verrouillage/déverrouillage, le verrou primaire étant de préférence un vérin simple effet.

La première vanne est alimentée par la vanne centrale en entrée et alimente en sortie le distributeur à tiroir, l'actionneur de manoeuvre et le moyen de verrouillage.

La deuxième vanne est alimentée par la vanne centrale en entrée et alimente en sortie le distributeur à tiroir, et un verrou tertiaire.Le verrou primaire est déverrouillable sous charge.

Le distributeur à tiroir est configuré pour atteindre l'une de la première position stable et de la deuxième position stable lorsqu'il est alimenté par une pression identique venant à la fois de la première vanne de commande et de la deuxième vanne de commande.

Un dispositif de rappel agit sur le distributeur à tiroir de sorte qu'il adopte une position par défaut choisie parmi la première position stable et la deuxième position stable lorsque le distributeur à tiroir est alimenté par une pression identique venant à la fois de la première vanne de commande et de la deuxième vanne de commande. L'actionneur de manoeuvre est configuré pour être commandé, au moins en fermeture, par le distributeur à tiroir.

D'autres caractéristiques et avantages de l'invention ressortiront à la lecture de la description qui suit, donnée uniquement à titre d'exemple, en référence aux figures annexées, qui illustrent :
[Fig. 1] une coupe schématique partielle d'une nacelle de l'état de l'art;
[Fig. 2] une vue schématique d'un système de commande d'un inverseur de poussée selon un premier mode de réalisation de l'invention ;
[Fig. 3] une vue schématique d'un système de commande d'un inverseur de poussée selon un deuxième mode de réalisation de l'invention ;
[Fig. 4] une vue schématique d'un système de commande d'un inverseur de poussée selon un troisième mode de réalisation de l'invention.

Sur l'ensemble de ces figures, des références identiques ou analogues désignent des organes ou ensembles d'organes identiques ou analogues.

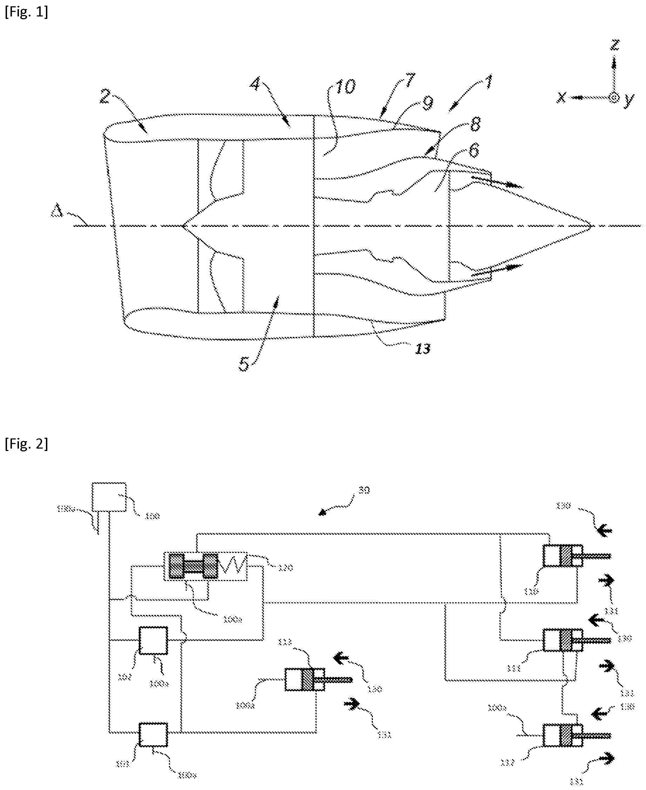

Comme représenté sur la figure 1, et de façon générale, une nacelle 1 de l'état de l'art présente une forme sensiblement tubulaire selon un axe longitudinal Δ (direction parallèle à X).

De façon classique, la nacelle 1 comprend une section amont 2, une section médiane 4 entourant une soufflante 5 d'un moteur 6 tel qu'un turboréacteur double flux et une section aval 7 abritant un système d'inversion de poussée (non visible), la nacelle servant à canaliser les flux d'air générés par le moteur 6.

La section aval 7 comprend quant à elle une structure interne 8 entourant la partie amont du turboréacteur 6, une structure externe 9 formant un canal de flux mélangé 10, et un capot externe 13 comportant des moyens d'inversion de poussée mobiles (non représentés). Les moyens d'inversion de poussée mobiles comprennent au moins une porte mobile. Comme représenté sur les figures 2, 3 et 4, afin de commander des portes du capot externe 13 pour réaliser l'inversion de poussée, le système de commande 30 utilise des moyens de pression hydrauliques ou pneumatiques ou encore électromécaniques. Il comprend au moins un actionneur de manoeuvre 110 agencé pour manoeuvrer la ou les portes entre les positions de jet direct dans laquelle la porte assure la continuité aérodynamique de la nacelle et de jet inversé dans laquelle elle ouvre au moins un passage dans la nacelle recevant un flux d'air dévié par les moyens d'inversion de poussée pour le renvoyer vers l'extérieur et vers l'avant. L'actionneur de manoeuvre 110 est composé par exemple d'un ou plusieurs vérins hydrauliques. L'actionneur de manoeuvre 110 est par exemple fixé directement ou indirectement sur au moins l'une des portes de façon à ce que lorsqu'il est dans une position de fermeture 131, la porte est manoeuvrée en position de jet direct. Dans la position d'ouverture 130, l'actionneur de manoeuvre 110 entraîne la porte vers une position de jet inversé. L'actionneur de manoeuvre 110 est relié et commandé, par exemple de façon hydraulique, par au moins l'un des éléments choisis parmi la première vanne 102, la deuxième vanne 101 et le distributeur à tiroir 120 décrits ci-après.

Le système de commande 30 comprend également au moins un moyen de verrouillage/déverrouillage 111 permettant le verrouillage et/ou le déverrouillage de la porte. Le moyen de verrouillage/déverrouillage 111 est en outre mobile entre une position de fermeture 131 dans laquelle il maintient les portes en position de jet direct et une position d'ouverture 130 dans laquelle les portes sont libérées. Le moyen de verrouillage/déverrouillage 111 peut par exemple comporter un vérin hydraulique ou pneumatique ou magnétique ou électrique couplé à des crochets venant s'articuler et se bloquer autour d'éléments solidaires des portes. L'homme du métier pourra également agencer un moyen de verrouillage/déverrouillage 111 selon ses connaissances générales afin qu'il puisse être mobile entre une position de fermeture 131 dans laquelle il maintient les portes en position de jet direct et une position d'ouverture 130 dans laquelle les portes sont libérées. Le moyen de verrouillage/déverrouillage 111 est relié et commandé, par exemple de façon hydraulique, par au moins l'un des éléments choisis parmi la première vanne 102, la deuxième vanne 101 et le distributeur à tiroir 120 décrits ci-après. Dans tous les modes de réalisations, le moyen de verrouillage/déverrouillage 111 doit être déverrouillable sous charge.

Le système de commande 30 comprend également une vanne centrale de commande 100 qui forme une unité de commande d'isolation. Cette vanne permet avantageusement d'isoler le système en termes de pressurisation. Elle est par exemple de type électrovanne à tiroir, avec capteur de pression pour permettre la surveillance de son état.

Le système de commande 30 comprend également une première vanne de commande 102 par exemple de type électrovanne 3 voies. Le système de commande 30 comprend également une deuxième vanne de commande 102 de type électrovanne 3 voies. Chacune est alimentée par un circuit hydraulique par la vanne centrale de commande 100. La première vanne de commande 102 et la deuxième vanne de commande 101 sont contrôlées par exemple de façon électromagnétique afin de pouvoir mettre sélectivement à la pression de service où à la pression de retour le circuit hydraulique auquel elles sont reliées.

Le système de commande 30 comprend en outre un distributeur à tiroir 120 ayant une première et une deuxième positions stables. Le distributeur à tiroir 120 est alimenté par exemple de façon hydraulique au moins par les première et deuxième vannes de commande 102, 101. Le distributeur à tiroir 120 est configuré de sorte que la différence de pression entre les deux arrivées des première et deuxième vannes de commande 102, 101 assure le déplacement du tiroir du distributeur entre les deux positions stables, se faisant par exemple ouvrant ou fermant le distributeur à tiroir 120. Avantageusement, le tiroir du distributeur à tiroir 120 est en position de fermeture si la deuxième vanne de commande 101 est active et si la première vanne de commande 102 est non active. Lorsque les pressions venant de la première et de la deuxième vanne de commande 102, 101 sont identiques alors l'une parmi la première ou la deuxième position est adoptée par le distributeur à tiroir 120. Préférentiellement, le distributeur à tiroir 120 est dans la position d'ouverture par défaut si les pressions issues de la première et de la deuxième vanne de commande 102, 101 sont identiques. La position d'ouverture par défaut du distributeur à tiroir 120 peut également, par exemple, être obtenue par un dispositif de rappel comme un ressort. Ainsi, le dispositif de rappel agit sur le distributeur à tiroir de sorte qu'il adopte une position par défaut choisie parmi la première position stable et la deuxième position stable lorsque le distributeur à tiroir 120 est alimenté par une pression identique venant à la fois de la première vanne de commande 102 et de la deuxième vanne de commande 101. La première ou la deuxième position du distributeur à tiroir 120 peuvent également être obtenues à l'aide du dispositif de rappel. Ainsi grâce à cette architecture, à la pressurisation du système à l'ouverture de la vanne centrale de commande 100, il n'y a pas d'effort de fermeture, en d'autres termes pas de sur-escamotage exercé par exemple sur les vérins composants l'actionneur de manoeuvre 110 ou composants le moyen de verrouillage/déverrouillage 111.

Dans un exemple, l'actionneur de manoeuvre 110 et le moyen de verrouillage/déverrouillage 111 sont commandés par des vérins double effet à deux chambres, chacun alimenté par au moins un élément choisi parmi la première vanne de commande 102, la deuxième vanne de commande 101 et le distributeur à tiroir 120. Dans tous les modes de réalisation, le distributeur à tiroir 120 est alimenté par la vanne centrale de commande 100 et commandé par la différence de pression, à ses bornes, entre l'alimentation venant du circuit passant par la première vanne de commande 102 et la deuxième vanne de commande 101.

Dans un premier mode de réalisation, illustré sur la figure 2, le système de commande 30 comprend un verrou primaire 112 commandé, notamment pour atteindre une position d'ouverture 130, par le moyen de verrouillage/déverrouillage 111 une fois que celui-ci est arrivé en position déverrouillée d'ouverture 130 complète. Cela assure avantageusement que le moyen de verrouillage/déverrouillage 111 est dans sa position d'ouverture 130 lorsque le verrou primaire 112 est libéré et que le déploiement des portes commence ce qui permet de ne pas avoir d'efforts excessifs sur la structure. Le verrou primaire 112 comporte, par exemple, un vérin simple effet. Le verrou primaire 112 comprend, dans un autre exemple, une partie en forme de crochet. Dans ce premier mode de réalisation, la deuxième vanne 101 est alimentée par la vanne centrale 100 en entrée et elle alimente en sortie le distributeur à tiroir 120 pour le commander et un verrou tertiaire 113. Dans un exemple, le verrou tertiaire comporte un vérin notamment simple effet. Le verrou primaire 112 et le moyen de verrouillage 111 sont déverrouillables sous charge. Le verrou tertiaire 113 et le verrou primaire 112 permettent de proposer une sécurité supplémentaire en cas de panne par exemple du verrouillage/déverrouillage 111. La première vanne de commande 102 est alimentée par la vanne centrale 100 en entrée. La première vanne de commande 102 alimente ensuite en sortie le distributeur à tiroir 120, qui dans ce mode de réalisation est un distributeur simple, l'actionneur de manoeuvre 110 et le moyen de verrouillage 111. L'actionneur de manoeuvre 110 est alimenté par la deuxième vanne de commande 102 pour atteindre la position d'ouverture 130 et par le distributeur à tiroir 120 pour atteindre la position de fermeture 131. Le circuit global, par exemple hydraulique, est clos par l'intermédiaire de retours hydrauliques 100a. Cette architecture permet avantageusement de réduire le risque d'incident si une panne survenait. Les étapes de mise en oeuvre de l'ouverture (étapes A à D) et de la fermeture (étape E) des portes de l'inverseur de poussée, à partir des éléments du système de commande 30 décrit précédemment, sont données dans le tableau 1.

**[Tableau 1**

| | | **101** | **102** | **100** | **110** | **111** | **112** | **113** |
|---|---|---|---|---|---|---|---|---|
| **Ouverture portes** | A | Fermé | Fermé | Ouvert | Sans action | Sans action | Sans action | Sans action |
| | B | Ouvert | Ouvert | Ouvert | 130 | 130 (partielle) | Sans action | 130 |
| | C | Ouvert | Ouvert | Ouvert | 130 | 130 | 130 | 130 |
| | D | Fermé | Ouvert | Ouvert | 130 | 130 | 130 | 130 |
| **Fermeture portes** | E | Ouvert | Fermé | Ouvert | 131 | 131 | 131 | 130 |

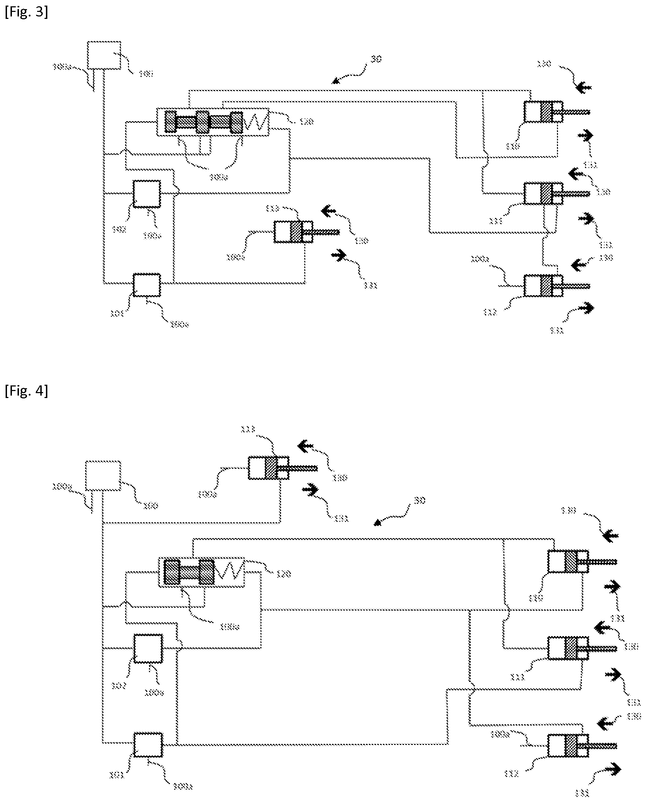

Dans un deuxième mode de réalisation illustré sur la figure 3, le système de commande 30 comprend un verrou primaire 112 commandé, notamment pour atteindre sa configuration d'ouverture 130, par le moyen de verrouillage/déverrouillage 111 une fois que celui-ci est arrivé en position déverrouillée 130 complète. Cela assure avantageusement que le moyen de verrouillage/déverrouillage 111 est dans sa position d'ouverture 130 lorsque le verrou primaire 112 est libéré et que le déploiement des portes commence, ce qui permet de ne pas avoir d'efforts excessifs sur la structure. Le verrou primaire 112 comporte, par exemple, un vérin simple effet. Le verrou primaire 112 comprend, dans un exemple, une partie en forme de crochet. Le verrou primaire 112 et le moyen de verrouillage 111 doivent être déverrouillables sous charge. Dans ce deuxième mode de réalisation, la deuxième vanne 101 est alimentée par la vanne centrale 100 en entrée et elle alimente en sortie le distributeur à tiroir 120 pour le commander et un verrou tertiaire 113. Dans un exemple, le verrou tertiaire 113 comporte par exemple un vérin notamment simple effet. Le verrou tertiaire 113 et le verrou primaire 112 permettent notamment de proposer une sécurité supplémentaire en cas de panne par exemple du verrouillage/déverrouillage 111. La première vanne de commande 102 est alimentée par la vanne centrale 100 en entrée. La première vanne de commande 102 alimente ensuite en sortie le distributeur à tiroir 120 et le moyen de verrouillage 111. Dans ce mode de réalisation, le distributeur à tiroir 120 est de type double ce qui lui permet de commander l'actionneur de manoeuvre 110 dans un sens ou dans l'autre suivant la position du tiroir dudit distributeur à tiroir 120. La deuxième vanne de commande 101 est alimentée par la vanne centrale 100 en entrée. Le moyen de verrouillage/déverrouillage 111 est configuré pour être alimenté par la deuxième vanne de commande 102 afin d'atteindre sa position d'ouverture 130 et alimenté par le distributeur à tiroir 120 afin d'atteindre sa position de fermeture 131. Le distributeur à tiroir 120 alimente, dans une première configuration intermédiaire pilotée par les premières et deuxièmes vannes de commande 102, 101, l'actionneur 110 vers sa position de fermeture 131 et dans une seconde configuration intermédiaire pilotée également par les première et deuxième vannes de commande 102, 101, le distributeur à tiroir 120 alimente l'actionneur dans sa position d'ouverture 130. Dans ce mode de réalisation l'actionneur 110 est donc entièrement piloté par le distributeur à tiroir 120 ce qui permet de ne pas être impacté par la limite de débit de la première vanne de commande 102. Le circuit global, par exemple hydraulique, est clos par l'intermédiaire de retours hydrauliques 100a. Un tableau décrivant les étapes de mise en oeuvre de l'ouverture (étapes A à D) et de la fermeture (étape E) des portes de l'inverseur de poussée, à partir des éléments du système de commande 30 décrit précédemment, est donné dans le tableau 2.

**Tableau 2]**

| | | **101** | **102** | **100** | **110** | **111** | **112** | **113** |
|---|---|---|---|---|---|---|---|---|
| **Ouverture portes** | A | Fermé | Fermé | Ouvert | 130 | Sans action | Sans action | Sans action |
| | B | Ouvert | Ouvert | Ouvert | 130 | 130 (partielle) | Sans action | 130 |
| | C | Ouvert | Ouvert | Ouvert | 130 | 130 | 130 | 130 |
| | D | Fermé | Ouvert | Ouvert | 130 | 130 | 130 | 131 |
| **Fermeture portes** | E | Ouvert | Fermé | Ouvert | 131 | 131 | 131 | 130 |

Dans un troisième mode de réalisation, illustré sur la figure 4, le système de commande 30 comprend un verrou primaire 112 commandé par la première vanne de commande 102. Le verrou primaire 112 comporte, par exemple, un vérin simple effet. Le verrou primaire 112 comprend, dans un exemple, une partie en forme de crochet. Dans ce troisième mode de réalisation, la deuxième vanne 101 est alimentée par la vanne centrale 100 en entrée et elle alimente en sortie le distributeur à tiroir 120 pour le commander et le moyen de verrouillage 111. Dans ce mode de réalisation, le distributeur à tiroir 120 est de type double ce qui lui permet de commander l'actionneur de manoeuvre 110 dans un sens ou dans l'autre suivant la position du tiroir dudit distributeur à tiroir 120. Un verrou tertiaire 113 facultatif est alimenté en entrée par la vanne centrale de commande 100. Dans un exemple, le verrou tertiaire comporte par exemple un vérin notamment simple effet. Dans un autre exemple préférentiel, le verrou primaire 112 est déverrouillable sous charge. Le moyen de verrouillage 111 doit être lui dans tous les cas déverrouillable sous charge. Le verrou tertiaire 113 et le verrou primaire 112 permettent de proposer une sécurité supplémentaire en cas de panne par exemple du moyen verrouillage/déverrouillage 111. La première vanne de commande 102 est alimentée par la vanne centrale 100 en entrée. La première vanne de commande 102 alimente ensuite en sortie le distributeur à tiroir 120 pour le commander, l'actionneur de manoeuvre 110 et le verrou primaire 112. Le circuit global, par exemple hydraulique, est clos par l'intermédiaire de retours hydrauliques 100a. Cette architecture permet avantageusement d'éliminer un mode commun potentiel entre le verrou primaire 112 et le moyen de verrouillage 111. Un tableau décrivant les étapes de mise en oeuvre de l'ouverture (étapes A à D) et de la fermeture (étape E) des portes de l'inverseur de poussée, à partir des éléments du système de commande 30 décrit précédemment, est donné dans le tableau 3.

**[Tableau 3]**

| | | **101** | **102** | **100** | **110** | **111** | **112** | **113** |
|---|---|---|---|---|---|---|---|---|
| **Ouverture portes** | A | Fermé | Fermé | Ouvert | Sans action | Sans action | Sans action | 130 |
| | B | Fermé | Ouvert | Ouvert | 130 | Sans action | 130 | 130 |
| | C | Ouvert | Ouvert | Ouvert | 130 | 130 | 130 | 130 |
| | D | Fermé | Ouvert | Ouvert | 130 | Sans action | 130 | 130 |
| **Fermeture portes** | E | Ouvert | Fermé | Ouvert | 131 | 131 | 131 | 130 |

## Revendications

1. Système de commande (30) d'un inverseur de poussée pour une nacelle d'un ensemble propulsif comprenant un moteur et abritant des moyens d'inversion de poussée mobiles, les moyens d'inversion de poussée mobiles comprenant au moins une porte mobile entre une position de jet direct, dans laquelle la porte assure la continuité aérodynamique de la nacelle et une position de jet inversé dans laquelle elle ouvre au moins un passage dans la nacelle recevant un flux d'air dévié par les moyens d'inversion de poussée pour le renvoyer vers l'extérieur et vers l'avant, le système de commande (30) comprenant :
- au moins un actionneur de manoeuvre (110) agencé pour manoeuvrer la porte entre les positions de jet direct et de jet inversé,
- au moins un moyen de verrouillage/déverrouillage (111) déverrouillable sous charge permettant le verrouillage et/ou le déverrouillage de la porte, le moyen de verrouillage/déverrouillage (111) étant mobile entre une position de fermeture (131) dans laquelle il maintient les portes en position de jet direct et une position d'ouverture (130) dans laquelle les portes sont libérées,
le système de commande étant **caractérisé en ce qu'**il comprend :
- une vanne centrale de commande (100) formant une unité de commande d'isolation,
- une première et une deuxième vanne de commande (102, 101), chacune alimentée par la vanne centrale de commande (100),
- un distributeur à tiroir (120), alimenté au moins par les première et deuxième vannes de commande (102, 101), le distributeur à tiroir (120) étant configuré de sorte que la différence de pression entre les deux arrivées des première et deuxième vannes (102, 101) de commande assure le déplacement du tiroir du distributeur entre une première position stable et une deuxième position stable
l'actionneur de manoeuvre (110) et le moyen de verrouillage/déverrouillage (111) étant configurés pour être commandés chacun par au moins un élément choisi parmi la première vanne de commande (102), la deuxième vanne de commande (101) et le distributeur à tiroir (120).

2. Système de commande (30) selon la revendication 1, **caractérisé en ce que** l'actionneur de manoeuvre (110) et le moyen de verrouillage (111) sont commandés par des vérins double effet à deux chambres, chacun alimenté par au moins un élément choisi parmi la première vanne de commande (102), la deuxième vanne de commande (101) et le distributeur à tiroir (120).

3. Système de commande (30) selon la revendication 1 ou 2, **caractérisé en ce qu'**il comprend un verrou primaire (112) commandé par le moyen de verrouillage/déverrouillage (111), le verrou primaire (112) étant de préférence un vérin simple effet.

4. Système de commande (30) selon l'une quelconque des revendications précédentes, **caractérisé en ce que** la première vanne de commande (102) est alimentée par la vanne centrale (100) en entrée et alimente en sortie le distributeur à tiroir (120), l'actionneur de manoeuvre (110) et le moyen de verrouillage (111).

5. Système de commande (30) selon l'une quelconque des revendications précédentes, **caractérisé en ce que** la deuxième vanne de commande (101) est alimentée par la vanne centrale (100) en entrée et alimente en sortie le distributeur à tiroir (120), et un verrou tertiaire (113).

6. Système de commande (30) selon l'une des revendications 1 à 3, **caractérisé en ce que** l'actionneur de manoeuvre (110) est commandé, au moins en fermeture, par le distributeur à tiroir (120).

7. Système de commande (30) selon l'une quelconque des revendications précédentes, **caractérisé en ce que** le verrou primaire (112) est déverrouillable sous charge.

8. Système de commande (30) selon l'une quelconque des revendications précédentes, **caractérisé en ce que** le distributeur à tiroir (120) est configuré pour atteindre l'une de la première position stable et de la deuxième position stable lorsqu'il est alimenté par une pression identique venant à la fois de la première vanne de commande (102) et de la deuxième vanne de commande (101).

9. Système de commande (30) selon l'une des revendications précédentes **caractérisé en ce qu'**un dispositif de rappel agit sur le distributeur à tiroir (120) de sorte qu'il adopte une position par défaut choisie parmi la première position stable et la deuxième position stable lorsque le distributeur à tiroir (120) est alimenté par une pression identique venant à la fois de la première vanne de commande (102) et de la deuxième vanne de commande (101).

## Patentansprüche

1. Steuerungssystem (30) einer Schubumkehrvorrichtung für eine Gondel einer Antriebseinheit, die einen Motor umfasst, und bewegliche Schubumkehrmittel beherbergt, wobei die beweglichen Schubumkehrmittel mindestens eine Tür umfassen, die zwischen einer Direktstrahlposition, in der die Tür für die aerodynamische Kontinuität der Gondel sorgt, und einer Umkehrstrahlposition, in der sie mindestens einen Durchlass in der Gondel öffnet, der einen von den Schubumkehrmitteln abgelenkten Luftstrom aufnimmt, beweglich ist, um ihn nach außen und nach vorne zurückzuschicken, wobei das Steuerungssystem (30) umfasst:
- mindestens einen Manövrier-Stellantrieb (110), der angeordnet ist, um die Tür zwischen der Direktstrahl- und Umkehrstrahlposition zu manövrieren,
- mindestens ein unter Last entriegelbares Verriegelungs-/Entriegelungsmittel (111), welches das Verriegeln/das Entriegeln der Tür ermöglicht, wobei das Verriegelungs-/Entriegelungsmittel (111) zwischen einer Schließposition (131), in der es die Türen in einer Direktstrahlposition hält, und einer Öffnungsposition (130), in der die Türen freigegeben sind, beweglich ist,
wobei das Steuerungssystem **dadurch gekennzeichnet ist, dass** es Folgendes umfasst:
- ein zentrales Steuerungsventil (100), das eine Trennungssteuerungseinheit bildet,
- ein erstes und ein zweites Steuerungsventil (102, 101), von denen jedes durch das zentrale Steuerungsventil (100) versorgt wird,
- ein Schieberventil (120), das mindestens durch das erste und zweite Steuerungsventil (102, 101) versorgt wird, wobei das Schieberventil (120) derart konfiguriert ist, dass der Druckunterschied zwischen den beiden Eintritten des ersten und zweiten Steuerungsventils (102, 101) für die Bewegung des Schiebers des Ventils zwischen einer ersten stabilen Position und einer zweiten stabilen Position sorgt
wobei der Manövrier-Stellantrieb (110) und das Verriegelungs-/Entriegelungsmittel (111) konfiguriert sind, um jeweils durch mindestens ein Element gesteuert zu werden, das aus dem ersten Steuerungsventil (102), dem zweiten Steuerungsventil (101) und dem Schieberventil (120) ausgewählt wird.

2. Steuerungssystem (30) nach Anspruch 1, **dadurch gekennzeichnet, dass** der Manövrier-Stellantrieb (110) und das Verriegelungsmittel (111) durch doppeltwirkende Zylinder mit zwei Kammern gesteuert werden, die jeweils durch mindestens ein Element versorgt werden, das aus dem ersten Steuerungsventil (102), dem zweiten Steuerungsventil (101) und dem Schieberventil (120) ausgewählt wird.

3. Steuerungssystem (30) nach Anspruch 1 oder 2, **dadurch gekennzeichnet, dass** es einen Primärriegel (112) umfasst, der durch das Verriegelungs-/Entriegelungsmittel (111) gesteuert wird, wobei der Primärriegel (112) vorzugsweise ein einfachwirkender Zylinder ist.

4. Steuerungssystem (30) nach einem der vorstehenden Ansprüche, **dadurch gekennzeichnet, dass** das erste Steuerungsventil (102) durch das zentrale Ventil (100) am Eingang versorgt wird, und am Ausgang das Schieberventil (120), den Manövrier-Stellantrieb (110), und das Verriegelungsmittel (111) versorgt.

5. Steuerungssystem (30) nach einem der vorstehenden Ansprüche, **dadurch gekennzeichnet, dass** das zweite Steuerungsventil (101) durch das zentrale Ventil (100) am Eingang versorgt wird, und am Ausgang das Schieberventil (120) und einen Tertiärriegel (113) versorgt.

6. Steuerungssystem (30) nach einem der Ansprüche 1 bis 3, **dadurch gekennzeichnet, dass** der Manövrier-Stellantrieb (110) mindestens beim Schließen durch das Schieberventil (120) gesteuert wird.

7. Steuerungssystem (30) nach einem der vorstehenden Ansprüche, **dadurch gekennzeichnet, dass** der Primärriegel (112) unter Last entriegelbar ist.

8. Steuerungssystem (30) nach einem der vorstehenden Ansprüche, **dadurch gekennzeichnet, dass** das Schieberventil (120) konfiguriert ist, um eine von der ersten stabilen Position und der zweiten stabilen Position zu erreichen, wenn es durch einen identischen Druck versorgt wird, der sowohl von dem ersten Steuerungsventil (102) und dem zweiten Steuerungsventil (101) stammt.

9. Steuerungssystem (30) nach einem der vorstehenden Ansprüche, **dadurch gekennzeichnet, dass** eine Rückstellvorrichtung derart auf das Schieberventil (120) einwirkt, dass es eine Standardposition einnimmt, die aus der ersten stabilen Position und der zweiten stabilen Position ausgewählt wird, wenn das Schieberventil (120) durch einen identischen Druck versorgt wird, der sowohl von dem ersten Steuerungsventil (102) und dem zweiten Steuerungsventil (101) stammt.

## Claims

1. A control system (30) of a thrust reverser for a nacelle of a propulsion unit comprising an engine and accommodating movable thrust reversal means, the movable thrust reversal means comprising at least one door movable between a direct jet position, in which the door ensures the aerodynamic continuity of the nacelle and a reverse jet position in which it opens at least one passage in the nacelle receiving an air flow diverted by the thrust reversal means to return it back outwards and forwards, the control system (30) comprising:
- at least one maneuvering actuator (110) arranged so as to maneuver the door between the direct jet and reverse jet positions,
- at least one locking/unlocking means (111) unlockable under load enabling locking and/or unlocking of the door, the locking/unlocking means (111) being movable between a closure position (131) in which it holds the doors in the direct jet position and an opening position (130) in which the doors are released,
the control system being **characterized in that** it comprises:
- a central control valve (100) forming an isolation control unit,
- first and second control valves (102, 101), each fed by the central control valve (100),
- a spool control valve (120), fed at least by the first and second control valves (102, 101), the spool control valve (120) being configured so that the pressure difference between the two inlets of the first and second control valves (102, 101) ensures the displacement of the spool control valve between a first stable position and a second stable position,
each of the maneuvering actuator (110) and the locking/unlocking means (111) being configured to be controlled by at least one element selected amongst the first control valve (102), the second control valve (101) and the spool control valve (120).

2. The control system (30) according to claim 1, **characterized in that** the maneuvering actuator (110) and the locking means (111) are controlled by double-acting cylinders with two chambers, each fed by at least one element selected amongst the first control valve (102), the second control valve (101) and the spool control valve (120).

3. The control system (30) according to claim 1 or 2, **characterized in that** it comprises a primary lock (112) controlled by the locking/unlocking means (111), the primary lock (112) preferably consisting of a single-acting cylinder.

4. The control system (30) according to any one of the preceding claims, **characterized in that** the first control valve (102) is fed by the central valve (100) at the input and feeds at the output the spool control valve (120), the maneuvering actuator (110) and the locking means (111).

5. The control system (30) according to any one of the preceding claims, **characterized in that** the second control valve (101) is fed by the central valve (100) at the input and feeds at the output the spool control valve (120), and a tertiary lock (113).

6. The control system (30) according to any of claims 1 to 3, **characterized in that** the maneuvering actuator (110) is controlled, at least in closure, by the spool control valve (120).

7. The control system (30) according to any one of the preceding claims, **characterized in that** the primary lock (112) is unlockable under load.

8. The control system (30) according to any one of the preceding claims, **characterized in that** the spool control valve (120) is configured to reach one amongst the first stable position and the second stable position when it is fed by an identical pressure coming from both the first control valve (102) and the second control valve (101).

9. The control system (30) according to any of the preceding claims, **characterized in that** a return device acts on the spool control valve (120) so that it adopts a default position amongst the first stable position and the second stable position when the spool control valve (120) is fed by an identical pressure coming from both the first control valve (102) and the second control valve (101).
